# EUROPEAN PATENT APPLICATION

(11) **EP 4 664 370 A1**
(43) Date of publication of application: **17.12.2025**
(21) Application number: 24766287.7
(22) Date of filing: 28.02.2024
(51) Int. Cl.: G06Q 10/04, G06N 3/08, G06N 3/0464

(54) **TIME SEQUENCE DATA PREDICTION METHOD AND APPARATUS, AND STORAGE MEDIUM**

(30) Priority: 03.03.2023 CN 202310238123
(71) Applicant: Huawei Technologies Co., Ltd., Shenzhen, Guangdong 518129 (CN)
(72) Inventor: DARLOW, Luke, Shenzhen, Guangdong 518129 (CN); JOOSEN, Artjom, Shenzhen, Guangdong 518129 (CN); ASENOV, Martin, Shenzhen, Guangdong 518129 (CN); BARKER, Adam, Shenzhen, Guangdong 518129 (CN); WANG, Jianfeng, Shenzhen, Guangdong 518129 (CN); DENG, Qiwen, Shenzhen, Guangdong 518129 (CN)
(74) Representative: Gill Jennings & Every LLP
(86) International application number: PCT/CN2024/078898
(87) International publication number: WO 2024/183565

(57) **Abstract**

A time series data prediction method and apparatus, and a storage medium are provided. The method includes: obtaining current time series data collected in a current time window that is adjacent to and precedes a prediction time window in a current time period, and obtaining a plurality of groups of historical time series data separately collected in a same target time window of a plurality of historical time periods; encoding the plurality of groups of historical time series data by using a plurality of encoders respectively, to obtain a plurality of historical time series features respectively corresponding to the plurality of groups of historical time series data, where each historical time series feature represents relative location information and change trend information of each group of historical time series data in the target time window; and determining, by using a decoder based on the plurality of historical time series features and the current time series data, predicted time series data corresponding to a target object in the prediction time window. In this way, fine-granularity and long-period time series prediction can be efficiently and accurately implemented.

## Description

This application claims priority to Chinese Patent Application No. 202310238123.8, filed with the China National Intellectual Property Administration on March 3, 2023 and entitled "TIME SERIES DATA PREDICTION METHOD AND APPARATUS, AND STORAGE MEDIUM", which is incorporated herein by reference in its entirety.

### TECHNICAL FIELD

This application relates to the field of computer technologies, and in particular, to a time series data prediction method and apparatus, and a storage medium.

### BACKGROUND

With development of cloud computing, more developers deploy developed applications on a cloud platform (for example, a serverless architecture of serverless computing on the cloud platform). This can reduce operation and maintenance overheads of a large quantity of computing resources, and the developers can focus more on service code logic without considering complex configurations of underlying computing resources. In this scenario, because the cloud platform usually uses a virtual machine or a container to deploy a function instance, application code, and the like, to process a user request sent by a user side, the cloud platform usually continuously maintains and runs related computing resources (a container, code, and the like) for a period of time. If the container does not receive the user request after waiting for a period of time, the container and related code, an instance, and the like in the container are cleared; and subsequently, for a user request to arrive again, time for a new container to be initialized and related code to be loaded needs to be waited. This process is referred to as cold start. During the cold start, an execution delay of a function instance and an application is greatly increased, and overall performance of the cloud platform is also significantly affected.

Therefore, a quantity of containers running on the cloud platform needs to be scheduled, to improve processing performance of the cloud platform and reduce operating costs. This is because if a quantity of configured containers is excessively small, a quantity of times of cold start is increased, resulting in reducing overall processing performance (that is, increasing a request response delay). If an excessive quantity of containers are configured, computing resources are wasted, because these excessive computing resources do not provide a service for the received user request, and energy use and operation and maintenance costs are increased. In consideration that usually, the applications deployed on the cloud platform are oriented to user clients or internet of things devices, in a case of human participation, a part of request traffic for a user service presents an obvious periodic feature. Therefore, request traffic that may occur in a future period of time may be predicted by using historically collected traffic data, and a quantity of containers that the cloud platform needs to maintain in the future period of time is computed, so that container resources of the cloud platform are scheduled in advance, to adapt to the request traffic in the future period of time.

In the foregoing traffic prediction scenario, there is a case in which a collection granularity of data is far lower than a periodic trend of the data. For example, if the collection granularity of the data is one piece of data per second, the data is in a periodic trend of "day", and there are 86400 seconds per day, an amount of data collected over a plurality of days is excessively large. Such fine-granularity and long-period series data that is arranged in time may be referred to as time series data. However, an existing time series prediction technology is not applicable to the foregoing prediction scenario of fine-granularity and long-period time series data with an excessively-large data amount, and consequently there are problems of low prediction efficiency and low prediction precision.

### SUMMARY

In view of this, a time series data prediction method and apparatus, and a storage medium are provided.

According to a first aspect, an embodiment of this application provides a time series data prediction method. The method includes: in a prediction time window set for a to-be-predicted target object in a current time period, obtaining current time series data collected in a current time window that is adjacent to and precedes the prediction time window in the current time period, and obtaining a plurality of groups of historical time series data separately collected in a same target time window of a plurality of historical time periods, where the target time window includes the prediction time window and the current time window, and time series data includes generated behavior data of the target object at a plurality of time points in a time window; encoding the plurality of groups of historical time series data by using a plurality of encoders respectively, to obtain a plurality of historical time series features respectively corresponding to the plurality of groups of historical time series data, where each historical time series feature represents relative location information and change trend information of each group of historical time series data in the target time window; and determining, by using a decoder based on the plurality of historical time series features and the current time series data, predicted time series data corresponding to the target object in the prediction time window, where the predicted time series data includes predicted behavior data of the target object at a plurality of time points in the prediction time window.

According to this embodiment of this application, which time series data in the historical time period is important can be known a priori based on the prediction time window and the current time window. Then, the plurality of encoders separately use the historical time series data in the target time window of the plurality of historical time periods as an input; and after encoding, output the relative location information and the change trend information of the historical time series data to different encoding layers of the decoder, to provide an effective basis for the decoder to perform time series prediction in a future period of time, that is, use important historical series data in a same past target time window, to predict a series trend of the prediction time window in the current time period. In this way, all historical time series data in the plurality of historical time periods does not need to be used, and fine-granularity and long-period time series prediction can be efficiently and accurately implemented.

According to the first aspect, in a first possible implementation of the time series data prediction method, the decoder includes J decoding layers, each historical time series feature includes J time series sub-features, J is a positive integer, and determining, by using the decoder based on the plurality of historical time series features and the current time series data, the predicted time series data corresponding to the target object in the prediction time window includes: inputting the current time series data and a 1^{st} time series sub-feature of each historical time series feature to a 1^{st} decoding layer of the decoder, and outputting a 1^{st} predicted time series feature; inputting, to a j^{th} decoding layer of the decoder, a (j-1)^{th} predicted time series feature output by a (j-1)^{th} decoding layer and a j^{th} time series sub-feature of each historical time series feature, and outputting a j^{th} predicted time series feature, where j∈[2, J]; and determining the predicted time series data based on a J^{th} predicted time series feature output by a J^{th} decoding layer of the decoder and the prediction time window.

According to this embodiment of this application, time series sub-features of the plurality of historical time series features are respectively provided to corresponding decoding layers, that is, the encoder separately outputs a part of feature information of the historical time series data to different encoding layers of the decoder, to provide the effective basis for the decoder to perform time series prediction in the future period of time, so that series information of the historical time series data can be retained, a change trend of long-term time series data can be sensed, and impact of an accumulated error can be reduced.

In the first possible implementation of the first aspect, inputting the current time series data and the 1^{st} time series sub-feature of each historical time series feature to the 1^{st} decoding layer of the decoder, and outputting the 1^{st} predicted time series feature includes: encoding the current time series data, to obtain a 1^{st} encoded time series feature; determining, based on a similarity between the 1^{st} time series sub-feature of each historical time series feature and the 1^{st} encoded time series feature, an attention weight corresponding to the 1^{st} time series sub-feature of each historical time series feature; and performing weighted summation on the 1^{st} time series sub-feature of each historical time series feature based on the attention weight corresponding to the 1^{st} time series sub-feature of each historical time series feature, to obtain the 1^{st} predicted time series feature.

According to this embodiment of this application, the decoder can use short-length historical time series data for inference, without using historical time series data of a complete time period as an input; and the relative location information and the change trend information of the historical time series data can be retained, thereby greatly reducing the impact of the accumulated error, and performing more accurate prediction, so that a similarity between the current time series data of the current time period and the historical time series data of the historical time period can be searched for learning, and a size of future time series data can be predicted on a larger scale.

In the first possible implementation of the first aspect, inputting, to the j^{th} decoding layer of the decoder, the (j-1)^{th} predicted time series feature output by the (j-1)^{th} decoding layer and the j^{th} time series sub-feature of each historical time series feature, and outputting the j^{th} predicted time series feature includes: encoding the (j-1)^{th} predicted time series feature, to obtain a j^{th} encoded time series feature; determining, based on a similarity between the j^{th} time series sub-feature of each historical time series feature and the j^{th} encoded time series feature, an attention weight corresponding to the j^{th} time series sub-feature of each historical time series feature; and performing weighted summation on the j^{th} time series sub-feature of each historical time series feature based on the attention weight corresponding to the j^{th} time series sub-feature of each historical time series feature, to obtain the j^{th} predicted time series feature.

According to this embodiment of this application, the decoder can use short-length historical time series data for inference, without using historical time series data of a complete time period as an input; and the relative location information and the change trend information of the historical time series data can be retained, thereby greatly reducing the impact of the accumulated error, and performing more accurate prediction, so that a similarity between the current time series data of the current time period and the historical time series data of the historical time period can be searched for learning, and a size of future time series data can be predicted on a larger scale.

According to the first aspect, in a second possible implementation of the time series data prediction method, the encoder includes a feedforward network module and a multi-head self-attention mechanism module, the feedforward network module includes a Fourier transform convolution unit, the Fourier transform convolution unit is configured to perform Fourier transform and convolution processing on an input feature, and the multi-head self-attention mechanism module is configured to generate a historical time series feature by using a multi-head self-attention mechanism; and encoding the plurality of groups of historical time series data by using the plurality of encoders respectively, to obtain the plurality of historical time series features respectively corresponding to the plurality of groups of historical time series data includes: for an encoder corresponding to any group of historical time series data, inputting the historical time series data to a feedforward network module of the encoder, and outputting an intermediate time series feature; and inputting the intermediate time series feature and the historical time series data to the multi-head self-attention mechanism module, and outputting a historical time series feature corresponding to the historical time series data.

According to this embodiment of this application, the Fourier transform convolution unit is used in the encoder, so that a series length of input time series data is flexible and variable. In addition, feature information of the input data is extracted in frequency domain, and series information of the input time series data is still maintained; and in particular, a relationship may be established between similar frequency components by using frequency information of the input time series data in frequency domain, to break through a limitation that an input/output size needs to be fixed in a conventional convolution model.

According to the first aspect, in a third possible implementation of the time series data prediction method, obtaining the current time series data collected in the current time window that is adjacent to and precedes the prediction time window in the current time period includes: obtaining current original time series data collected in the current time window, and folding, based on a preset folding ratio, the current original time series data into current time series data in at least two dimensions, where the folding ratio indicates scales of folded series data in different dimensions, and a dimension of the current time series data is greater than that of the current original time series data; and obtaining the plurality of groups of historical time series data separately collected in the same target time window of the plurality of historical time periods includes: obtaining each group of historical original time series data collected in the same target time window in each historical time period, and folding, based on the preset folding ratio, each group of historical original time series data into historical time series data in at least two dimensions, where a dimension of the historical time series data is greater than that of the historical original time series data.

According to this embodiment of this application, memory occupation space of an entire prediction model (including the encoder and the decoder) can be improved, so that the encoder and the decoder process longer-time series data, and a series length that can be consumed by the model is increased. This is equivalent to increasing a parallel computing amount of the model, that is, having a higher data throughput. Therefore, subsequent processing efficiency of the encoder and the decoder can be improved, and no downsampling operation is required, which helps ensure precision of time series prediction.

According to the first aspect, in a fourth possible implementation of the time series data prediction method, the target object includes a user request, the behavior data includes request traffic of the user request, and the predicted time series data includes predicted request traffic of the user request at the plurality of time points in the prediction time window; and after obtaining the predicted time series data, the method further includes: scheduling, based on the predicted request traffic of the user request at the plurality of time points in the prediction time window, a computing resource used to process the user request, so that the scheduled computing resource adapts to the predicted request traffic.

According to this embodiment of this application, the request traffic of the user request can be predicted, and a traffic change trend can be considered in three dimensions: a long time series (a week and a month), a periodicity (a day), and real-time performance, to achieve more accurate fine-granularity and long-period time series prediction. This can reduce a quantity of times of cold start of a cloud platform, bring a low response delay to the user request, and reduce a waste of computing resources on a platform side.

According to the first aspect, in a fifth possible implementation of the time series data prediction method, the target object includes a traffic area, the behavior data includes vehicle traffic in the traffic area, and the predicted time series data includes predicted vehicle traffic in the traffic area at the plurality of time points in the prediction time window; and after obtaining the predicted time series data, the method further includes: adjusting a traffic signal timing scheme of a traffic signal light in the traffic area in the prediction time window based on the predicted vehicle traffic in the traffic area at the plurality of time points in the prediction time window, so that the adjusted traffic signal timing scheme adapts to the predicted vehicle traffic.

According to this embodiment of this application, the vehicle traffic in the traffic area can be predicted, and the traffic signal configuration scheme can be adjusted based on the predicted vehicle traffic, so that the adjusted traffic signal timing scheme adapts to the predicted vehicle traffic, traffic in the entire traffic area can be smooth, a traffic flow rate can be increased, and traffic congestion can be reduced.

According to a second aspect, an embodiment of this application provides a time series data prediction apparatus. The apparatus includes: an obtaining module, configured to: in a prediction time window set for a to-be-predicted target object in a current time period, obtain current time series data collected in a current time window that is adjacent to and precedes the prediction time window in the current time period, and obtain a plurality of groups of historical time series data separately collected in a same target time window of a plurality of historical time periods, where the target time window includes the prediction time window and the current time window, and time series data includes generated behavior data of the target object at a plurality of time points in a time window; an encoding module, configured to encode the plurality of groups of historical time series data by using a plurality of encoders respectively, to obtain a plurality of historical time series features respectively corresponding to the plurality of groups of historical time series data, where each historical time series feature represents relative location information and change trend information of each group of historical time series data in the target time window; and a decoding module, configured to determine, by using a decoder based on the plurality of historical time series features and the current time series data, predicted time series data corresponding to the target object in the prediction time window, where the predicted time series data includes predicted behavior data of the target object at a plurality of time points in the prediction time window.

According to the second aspect, in a first possible implementation of the time series data prediction apparatus, the decoder includes J decoding layers, each historical time series feature includes J time series sub-features, J is a positive integer, and determining, by using the decoder based on the plurality of historical time series features and the current time series data, the predicted time series data corresponding to the target object in the prediction time window includes: inputting the current time series data and a 1^{st} time series sub-feature of each historical time series feature to a 1^{st} decoding layer of the decoder, and outputting a 1^{st} predicted time series feature; inputting, to a j^{th} decoding layer of the decoder, a (j-1)^{th} predicted time series feature output by a (j-1)^{th} decoding layer and a j^{th} time series sub-feature of each historical time series feature, and outputting a j^{th} predicted time series feature, where j∈[2, J]; and determining the predicted time series data based on a J^{th} predicted time series feature output by a J^{th} decoding layer of the decoder and the prediction time window.

In the first possible implementation of the second aspect, inputting the current time series data and the 1^{st} time series sub-feature of each historical time series feature to the 1^{st} decoding layer of the decoder, and outputting the 1^{st} predicted time series feature includes: encoding the current time series data, to obtain a 1^{st} encoded time series feature; determining, based on a similarity between the 1^{st} time series sub-feature of each historical time series feature and the 1^{st} encoded time series feature, an attention weight corresponding to the 1^{st} time series sub-feature of each historical time series feature; and performing weighted summation on the 1^{st} time series sub-feature of each historical time series feature based on the attention weight corresponding to the 1^{st} time series sub-feature of each historical time series feature, to obtain the 1^{st} predicted time series feature.

In the first possible implementation of the second aspect, inputting, to the j^{th} decoding layer of the decoder, the (j-1)^{th} predicted time series feature output by the (j-1)^{th} decoding layer and the j^{th} time series sub-feature of each historical time series feature, and outputting the j^{th} predicted time series feature includes: encoding the (j-1)^{th} predicted time series feature, to obtain a j^{th} encoded time series feature; determining, based on a similarity between the j^{th} time series sub-feature of each historical time series feature and the j^{th} encoded time series feature, an attention weight corresponding to the j^{th} time series sub-feature of each historical time series feature; and performing weighted summation on the j^{th} time series sub-feature of each historical time series feature based on the attention weight corresponding to the j^{th} time series sub-feature of each historical time series feature, to obtain the j^{th} predicted time series feature.

According to the second aspect, in a second possible implementation of the time series data prediction apparatus, the encoder includes a feedforward network module and a multi-head self-attention mechanism module, the feedforward network module includes a Fourier transform convolution unit, the Fourier transform convolution unit is configured to perform Fourier transform and convolution processing on an input feature, and the multi-head self-attention mechanism module is configured to generate a historical time series feature by using a multi-head self-attention mechanism; and encoding the plurality of groups of historical time series data by using the plurality of encoders respectively, to obtain the plurality of historical time series features respectively corresponding to the plurality of groups of historical time series data includes: for an encoder corresponding to any group of historical time series data, inputting the historical time series data to a feedforward network module of the encoder, and outputting an intermediate time series feature; and inputting the intermediate time series feature and the historical time series data to the multi-head self-attention mechanism module, and outputting a historical time series feature corresponding to the historical time series data.

According to the second aspect, in a third possible implementation of the time series data prediction apparatus, obtaining the current time series data collected in the current time window that is adjacent to and precedes the prediction time window in the current time period includes: obtaining current original time series data collected in the current time window, and folding, based on a preset folding ratio, the current original time series data into current time series data in at least two dimensions, where the folding ratio indicates scales of folded series data in different dimensions, and a dimension of the current time series data is greater than that of the current original time series data; and obtaining the plurality of groups of historical time series data separately collected in the same target time window of the plurality of historical time periods includes: obtaining each group of historical original time series data collected in the same target time window in each historical time period, and folding, based on the preset folding ratio, each group of historical original time series data into historical time series data in at least two dimensions, where a dimension of the historical time series data is greater than that of the historical original time series data.

According to the second aspect, in a fourth possible implementation of the time series data prediction apparatus, the target object includes a user request, the behavior data includes request traffic of the user request, and the predicted time series data includes predicted request traffic of the user request at the plurality of time points in the prediction time window; and after obtaining the predicted time series data, the apparatus further includes: a scheduling module, configured to schedule, based on the predicted request traffic of the user request at the plurality of time points in the prediction time window, a computing resource used to process the user request, so that the scheduled computing resource adapts to the predicted request traffic.

According to the second aspect, in a fifth possible implementation of the time series data prediction apparatus, the target object includes a traffic area, the behavior data includes vehicle traffic in the traffic area, and the predicted time series data includes predicted vehicle traffic in the traffic area at the plurality of time points in the prediction time window; and after obtaining the predicted time series data, the apparatus further includes: an adjustment module, configured to adjust a traffic signal timing scheme of a traffic signal light in the traffic area in the prediction time window based on the predicted vehicle traffic in the traffic area at the plurality of time points in the prediction time window, so that the adjusted traffic signal timing scheme adapts to the predicted vehicle traffic.

According to a third aspect, an embodiment of this application provides a time series data prediction apparatus. The apparatus includes: a processor; and a memory, configured to store instructions executable by the processor. When the processor is configured to execute the instructions, the time series data prediction method according to the first aspect or one or more of the possible implementations of the first aspect is implemented.

According to a fourth aspect, an embodiment of this application provides a non-volatile computer-readable storage medium. The non-volatile computer-readable storage medium stores computer program instructions; and when the computer program instructions are executed by a processor, the time series data prediction method according to the first aspect or one or more of the possible implementations of the first aspect is implemented.

According to a fifth aspect, an embodiment of this application provides a terminal device. The terminal device may perform the time series data prediction method according to the first aspect or one or more of the possible implementations of the first aspect is implemented.

According to a sixth aspect, an embodiment of this application provides a computer program product. The computer program product includes computer-readable code or a non-volatile computer-readable storage medium carrying computer-readable code. When the computer-readable code is run in an electronic device, a processor in the electronic device performs the time series data prediction method according to the first aspect or one or more of the possible implementations of the first aspect is implemented.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1(a), FIG. 1(b), and FIG. 1(c) are diagrams of application scenarios according to an embodiment of this application;
FIG. 2 is a flowchart of a time series data prediction method according to an embodiment of this application;
FIG. 3 is a diagram of a change trend of a plurality of groups of historical time series data according to an embodiment of this application;
FIG. 4 is a diagram of a structure of an encoder according to an embodiment of the present disclosure;
FIG. 5 is a diagram of a processing process of a Fourier transform convolution unit according to an embodiment of this application;
FIG. 6A and FIG. 6B are a diagram of a structure of an encoder and a decoder according to an embodiment of this application;
FIG. 7 is a diagram of a processing process of a long-period attention mechanism module according to an embodiment of this application;
FIG. 8 is a diagram of a framework of a time series data prediction system according to an embodiment of this application;
FIG. 9 is a diagram of a structure of a time series data prediction apparatus according to an embodiment of this application; and
FIG. 10 is a diagram of a structure of an electronic device 1300 according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment, or illustration". Any embodiment described as "an example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

For better understanding of solutions in embodiments of this application, the following first describes related terms and concepts that may be used in embodiments of this application.
(1) Serverless (Serverless) computing is also referred to function-as-a-service FaaS, and is a cloud computing model. On a basis of platform-as-a-service (PaaS), serverless computing provides a mini-architecture. A terminal user does not need to deploy, configure, or manage servers, and all servers required for program running are provided by a cloud platform.
(2) A recurrent neural network (Recurrent Neural Network, RNN) is a type of recursive neural network (recursive neural network) in which series data is used as an input, recursion is performed in a series evolution direction, and all nodes (recurrent units) are connected in a chain form.
(3) Time series data (namely, time series data) is series data arranged in time, may be usually obtained by sampling at a preset time interval, and may reflect a situation in which data changes with time. A prediction task of time series data is to predict a future observation value based on a rule contained in the time series data.
(4) Fine-granularity and long-period time series data: A collection granularity of time series data is far lower than a periodic trend of the time series data (for example, one piece of data per second, with a day as a period, and 86400 seconds in a day), that is, the prediction task is to predict time series data with a fine granularity and a long period feature.
(5) seq2seq is a variant of a recurrent neural network, including two parts: an encoder (Encoder) and a decoder (Decoder). seq2seq is an important model in natural language processing, and may be used in scenarios such as machine translation, a dialog system, and automatic digest.
(6) A transformer is a classic model of natural language processing (Natural Language Processing, NLP), and uses a self-attention (Self-Attention) mechanism and does not use a series structure of the RNN. Therefore, the model may be trained in parallel and can have global information.
(7) Self-attention (Self-Attention) mechanism: The mechanism mainly includes three values K, V, and Q to which each minimum unit (for example, a single value at a specific time point in a time series) in an input series. A dot product of Q and K indicates a similarity between Q and K. Then, a softmax function is used to normalize the similarity between Q and K. In this case, a normalized result is a weight matrix (which may be understood as an attention score (attention score) matrix) whose values all ranges from 0 to 1, and V represents a feature obtained after linear transformation is input. Therefore, a filtered V feature can be obtained by multiplying the weight matrix by V. In short, Q and K are introduced to obtain a weight matrix whose values all ranges from 0 to 1, and V is introduced to retain an input feature. That is, Q, K, and V respectively represent input information, key information, and return information. In the input information, a weight of the key information is obtained by using a vector product, and then a weight matrix of the key information is multiplied by the return information projected to the key information, to obtain a final result.
(8) Multi-head self-attention (Multi-head Self-attention) mechanism: In comparison with the self-attention mechanism, a plurality of groups including Q, K, and V are used to respectively perform computing for a plurality of times based on the foregoing self-attention mechanism, that is, a plurality of heads are obtained. Then, a plurality of computing results are spliced, and a value obtained by performing linear transformation is used as a result of the multi-head self-attention mechanism.

As described above, in the foregoing traffic prediction scenario, there is a case in which a collection granularity of data is far lower than a periodic trend of the data. For example, if the collection granularity of the data is one piece of data per second, the data is in a periodic trend of "day", and there are 86400 seconds per day, an amount of data collected over a plurality of days is excessively large. Such fine-granularity and long-period series data that is arranged in time may be referred to as time series data. However, an existing time series prediction technology is not applicable to the foregoing prediction scenario of fine-granularity and long-period time series data with an excessively-large data amount, and consequently there are problems of low prediction efficiency and low prediction precision.

For example, in a conventional technology, the foregoing transformer model may be used to perform time series prediction, but the transformer is mainly applicable to coarse-granularity data (for example, a data point in each period of 10s or 100s). Because complexity of an internal attention mechanism of the transformer is usually positively correlated with a square of a series length, and a series length of fine-granularity and long-period time series data is long (that is, a data amount is large), a valid series length that can be input is greatly increased, and processing efficiency of the transformer is affected. In addition, another weakness of a transformer-based prediction model is time invariance of the self-attention mechanism in the transformer. The time invariance means that an own series of the input series is not retained during attention computing. This attribute may be used in the natural language processing or computer vision field. However, for a prediction scenario of time series data, the time invariance is a very fatal problem. Because a value of the time series at a specific future time point is usually more correlated with a value in a recent period of time, the self-attention model needs to be greatly improved to adapt to a prediction scenario of a long time series.

In another conventional technology, an AutoFormer model may alternatively be used. The AutoFormer is an improved version based on the Transformer model, mainly performs a series of model optimization for a prediction problem of periodic time series data, and mainly uses autocorrelation to learn a period carried by time series, to accurately predict a series in a future time window in combination with long-term trend prediction. Although the AutoFormer optimizes periodic time series data, the AutoFormer still requires continuous and complete series data in a plurality of periods as an input, and a training inference data amount is huge, which undoubtedly increases complexity of the model and a training inference delay. Therefore, the AutoFormer solution is not applicable to a traffic prediction scenario of the foregoing cloud platform, because periodic traffic prediction requires concurrent prediction of traffic data of several functions. If the inference delay of the model is too high, a valid prediction data length that can be used by a scheduler is shorter (because a part of time needs to be reserved for network data communication, function instance cold start, and data aggregation time), and accuracy is lower. A potential solution is to perform a further aggregation operation on data in a down-sampling (down-sampling) manner. For example, second-level traffic data is aggregated into minute-level or hour-level traffic data. After the prediction is complete, original data precision is restored by using a specific means. However, down-sampling is damaged, and prediction effect of lower quality is inevitably generated.

In conclusion, the current time series prediction technology is not suitable for fine-granularity and long-period time series data, and this includes long-term data trend prediction, and cannot consider both prediction efficiency and prediction precision. For such time series data, an existing end-to-end model cannot consider a long-term trend, a periodicity, and short-term fluctuation details in a unified model. In the conventional technology, a series order is maintained by using a fixed-length seq2seq model (not applicable to fine-granularity and long-period data), or an RNN (prone to error accumulation) is used, or the transformer based on the attention mechanism is used. Although the transformer shows excellent performance on many tasks (including some prediction tasks), inherent time invariance of the transformer is not suitable for continuous or ordered time series data.

In view of this, embodiments of this application provide a time series data prediction method, which is applicable to a prediction scenario of fine-granularity and long-period time series data. According to the time series data prediction method in embodiments of this application, correlation between different historical time periods and a current time period that currently needs to be predicted can be computed by using a periodic feature of the time series data, a traffic trend of a long time span can be sensed based on different weight values of the different historical time periods, and a traffic volume in a future period of time can be predicted. A many-to-one hierarchical link architecture of a plurality of encoders and a decoder is used, where the plurality of encoders separately use historical time series data in a target time window of a plurality of historical time periods as an input; after encoding, output a part of time series information of the historical time series data to different encoding layers of the decoder, to provide an effective basis for the decoder to predict the time series data in a future period of time; fold low-dimensional time series data into high-dimensional time series data, to increase a data throughput of the encoder and the decoder, and accelerate an operation inference speed; and further process the historical time series data in a target time window in past several historical time periods and current time series data (for example, real-time traffic on a current day) in a current time window in the current time period by using a Fourier transform convolution (FFT CONV) operation, so that a time series feature in a frequency domain dimension is extracted, and a size of an input/output does not need to be fixedly limited.

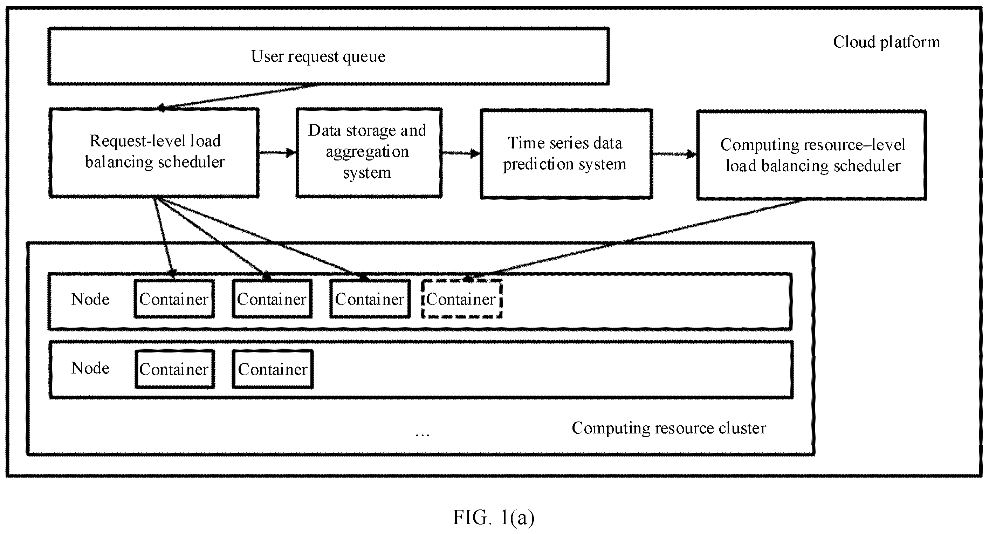

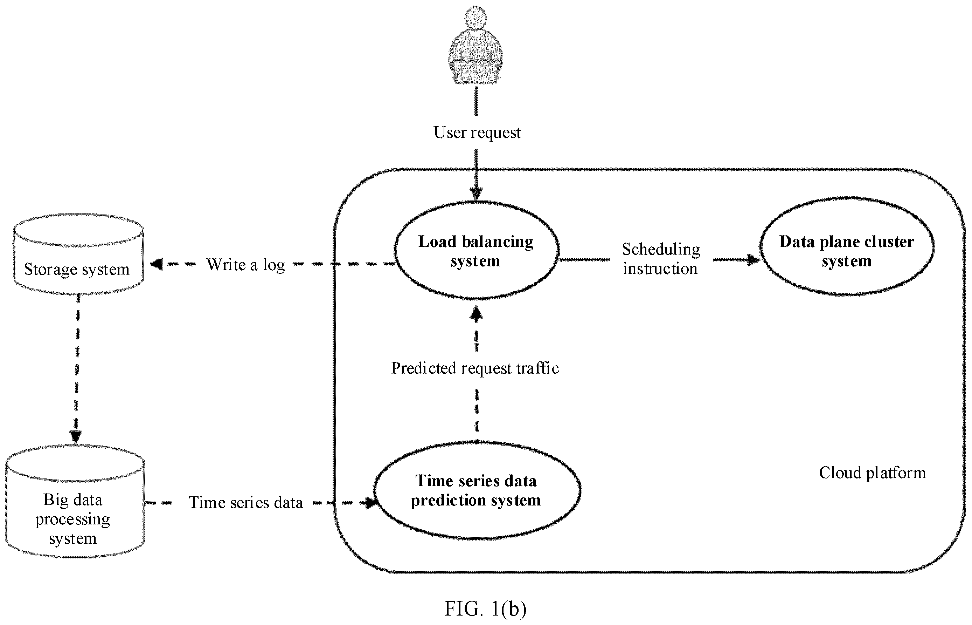

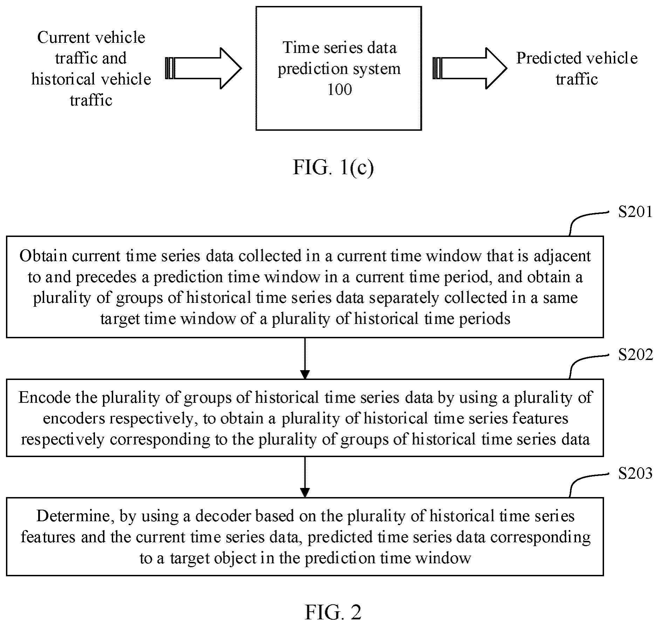

The time series data prediction method in embodiments of this application is applicable to, but is not limited to, prediction of various time series data having a periodic feature, for example, request traffic of a user request and vehicle traffic in a traffic area, so that request traffic, vehicle traffic, and the like in a specific future period of time can be accurately and efficiently predicted. The following separately briefly describes several application scenarios of the time series data prediction method in embodiments of this application. FIG. 1(a), FIG. 1(b), and FIG. 1(c) are diagrams of application scenarios according to an embodiment of this application.

FIG. 1(a) represents a prediction scenario of request traffic on a cloud platform. As shown in FIG. 1(a), the cloud platform includes a request-level load balancing scheduler, a data storage and aggregation system, a time series data prediction system, and a computing resource-level load balancing scheduler. The time series data prediction method in embodiments of this application may be applied to the time series data prediction system of the cloud platform. The request-level load balancing scheduler is configured to: for a user request in a user request queue, distribute the user request to a container (pod) of each computing node (node) in a computing resource cluster, generate traffic log data of the user request, and the like. The data storage and aggregation system is equivalent to a big data processing platform, and is configured to store and aggregate the traffic log data of the user request, that is, store and aggregate historical request traffic at each time point. The time series data prediction system may periodically trigger request traffic prediction; and when the request traffic prediction is triggered, may invoke a related interface to query historical request traffic in a target time period in historical several days and current request traffic real-time generated in a current time window from the data storage and aggregation system, and then predict request traffic in a future time window based on the historical request traffic in the historical several days and the current request traffic, for example, may predict request traffic per second in future 20 minutes. The time series data prediction system may send the predicted request traffic to the computing resource-level load balancing scheduler. The computing resource-level load balancing scheduler is configured to schedule, based on the predicted request traffic of the time series data prediction system, a quantity of containers running in the computing node. For example, if the predicted request traffic is increased, more containers may be started in advance, to reduce service response time of the user request; or if the predicted request is decreased, a part of containers may be closed in advance, to reduce a waste of computing resources of the cloud platform.

FIG. 1(b) represents another prediction scenario of request traffic on a cloud platform. As shown in FIG. 1(b), the cloud platform includes a load balancing system, a data plane cluster system, and a time series data prediction system. In addition, the cloud platform may communicate with a storage system of another platform and a big data processing system. The time series data prediction method in embodiments of this application may be applied to the time series data prediction system of the cloud platform. The load balancing system is configured to record a traffic log of a user request, the data plane cluster system is configured to manage a life cycle of a function instance corresponding to the user request, the cloud storage system is configured to store the traffic log of the user request, and the big data processing system is configured to aggregate the traffic log stored in the cloud storage module and cache the processed traffic data.

The request traffic prediction process based on the cloud platform in FIG. 1(b) may include: After the user request arrives at the load balancing system of the cloud platform, the load balancing system records, in the traffic log, the traffic data (for example, request traffic per second) of the function instance corresponding to the user request; and after collecting the traffic data in the traffic log, writes the traffic log into the cloud storage system. The time series data prediction system periodically invokes a related interface of the big data processing module to query and obtain time series data (including historical request traffic in a target time window and current request traffic in a current time window) in a specific time window in past several days. The big data processing system may aggregate the time series data to be queried by the time series data prediction system, and send the aggregated time series data to the time series data prediction system. The time series data prediction system may further analyze, based on the aggregated time series data, a periodic feature of the request traffic, and filter out a function instance whose request traffic does not have a periodic feature, that is, filter out a user request that does not have a periodic feature. The time series data prediction system predicts, by using the time series feature prediction method in embodiments of this application, request traffic data in a future time window based on time series data of a user request having a periodic feature, for example, may predict request traffic per second in a future 10 minutes, and push the predicted request traffic data to the load balancing system. The load balancing system sends a scheduling instruction to the data plane cluster system based on peak traffic, in a future period of time, indicated in the predicted request traffic data, to schedule the function instance corresponding to the user request, for example, scale out the function instance in advance, to reduce service response time of the user request, or scale in the function instance, to reduce a waste of computing resources of the cloud platform.

During actual application, a request traffic prediction function on the cloud platform may be displayed on a configuration page of the cloud platform in a form of a traffic prediction switch. A user may autonomously choose whether to enable traffic prediction. It should be understood that if the user enables traffic prediction, traffic prediction may be performed based on the prediction processes in FIG. 1(a) and FIG. 1(b). After traffic prediction is enabled, the time series data prediction system deployed on the foregoing cloud platform can be used to enable the cloud platform to predict the request traffic of the user request, and consider a traffic change trend in three dimensions: a long time series (for example, a week and a month), a periodicity (a day), and real-time performance, to achieve more accurate fine-granularity and long-period time series prediction. This reduces a quantity of times of cold start of the cloud platform, brings a low response delay to the user, and reduces a waste of computing resources on the cloud platform side.

FIG. 1(c) represents a prediction scenario of vehicle traffic in a traffic area. As shown in FIG. 1(c), a time series data prediction system 100 in embodiments of this application may be deployed on a terminal device (for example, a personal computer) or a server (for example, a cloud server). When a user expects to predict vehicle traffic at a plurality of time points in a specific future time window, for example, vehicle traffic per minute in one hour after a current time point (for example, 8:00), namely, vehicle traffic per minute from 8:00 to 9:00, the user may input, to the time series data prediction system 100, current vehicle traffic real-time collected in one hour before the current time point, namely, vehicle traffic per minute from 7:00 to 8:00; and historical vehicle traffic per minute from 7:00 to 9:00 in past several days. The time series data prediction system 100 may perform vehicle traffic prediction based on the current vehicle traffic and the historical vehicle traffic by using the time series data prediction method in embodiments of this application, and output prediction of vehicle traffic per minute from 8:00 to 9:00 on a current day. In this way, a traffic signal timing scheme of a traffic signal light in the traffic area in a prediction time window may be adjusted based on the predicted vehicle traffic, and the traffic signal timing scheme is used to control change time series of different traffic signals in the traffic signal light, so that the traffic signal configuration scheme can adapt to a traffic flow change in the traffic area. For example, for an intersection with large predicted vehicle traffic, green light duration of the intersection may be increased (that is, traffic duration is increased), red light duration is shortened (that is, waiting duration is shortened), and/or the like, so that traffic in the entire traffic area is smooth, a traffic flow rate is increased, and traffic congestion is reduced.

The time series data prediction method in embodiments of this application may be deployed on various terminal devices through software or hardware adaptation. The terminal device in this application may be a device having a wireless connection function. The wireless connection function means that the terminal device may be connected to another terminal device in a wireless connection manner such as Wi-Fi or Bluetooth. The terminal device in this application may also have a function of performing communication through a wired connection. The terminal device in this application may be a touchscreen device, may be a non-touchscreen device, or may have no screen. The touchscreen terminal device may be controlled by performing tapping, sliding, or the like on a display by using a finger, a stylus, or the like. The non-touchscreen device may be connected to an input device such as a mouse, a keyboard, or a touch panel, and the terminal device is controlled through the input device. The device that has no screen may be, for example, a Bluetooth speaker without a screen. For example, the terminal device in this application may be a smartphone, a netbook, a tablet computer, a notebook computer, a wearable electronic device (for example, a smart band or a smartwatch), a TV, a virtual reality device, a speaker, an electronic ink, or the like.

Alternatively, the time series data prediction method in embodiments of this application may be deployed on a server. The server may be located on a cloud or locally, may be a physical device, or may be a virtual device such as a virtual machine or a container; and has a wireless communication function. The wireless communication function may be provided on a chip (system) or another component or part of the server. The server may be a device having a wireless connection function. The wireless connection function means that the server may be connected to another server or terminal device in a wireless connection manner such as Wi-Fi or Bluetooth. The server in this application may also have a function of performing communication through a wired connection. For example, the server in this application may be located on a cloud, communicate with the terminal device, receive vehicle traffic data (including the foregoing historical vehicle traffic and the foregoing current vehicle traffic) sent by the terminal device, output predicted vehicle traffic by using the time series data prediction method deployed on the server, and return the predicted vehicle traffic to the terminal device, so that the user of the terminal device can adjust the traffic signal configuration scheme based on the predicted vehicle traffic.

The following describes in detail, by using FIG. 2 to FIG. 8, a time series data prediction method according to embodiments of this application.

FIG. 2 is a flowchart of a time series data prediction method according to an embodiment of this application. The method may be applied to the foregoing time series data prediction system, and the method may be performed by the foregoing terminal device or server. As shown in FIG. 2, the method includes the following steps.

Step S201: In a prediction time window set for a to-be-predicted target object in a current time period, obtain current time series data collected in a current time window that is adjacent to and precedes the prediction time window in the current time period, and obtain a plurality of groups of historical time series data separately collected in a same target time window of a plurality of historical time periods, where the target time window includes the prediction time window and the current time window.

The target object may be understood as an object of to-be-predicted time series data, for example, the user request or the traffic area in the foregoing application scenario. This is not limited in this embodiment of this application. Time series data includes generated behavior data of the target object at a plurality of time points in a time window, for example, request traffic of the user request per second in 10 minutes, and vehicle traffic per minute in the traffic area in one hour. It should be understood that neither a collection granularity of the time series data nor a statistical manner of the time series data is limited in this embodiment of this application. For example, the vehicle traffic may be collected and counted at a minute level, and the request traffic may be collected and counted at a second level.

The current time period is also a latest time period. For example, the current time period with "day" as a period unit may be a current day. It should be understood that the period unit of the time period is not limited in this embodiment of this application, and this depends on a periodic feature of the time series data of the target object. For example, if the request traffic of the user request periodically changes with "day" as a unit, the period unit is "day"; and if the vehicle traffic in the traffic area periodically changes in "12 hours", the period unit is 12 hours, and the current time period is also latest 12 hours.

The prediction time window may be understood as an upcoming future time window. During actual application, a user may preset a length of the prediction time window based on an actual requirement. A specific range of the prediction time window depends on a current time point to be predicted. For example, the length of the prediction time window may be set to 10 minutes. If the current time point is 8:00, the prediction time window may be 8:00 to 8:10.

The current time window is a time window that is adjacent to and precedes the prediction time window in the current time period, that is, the current time window and the prediction time window are in a same current time period. A length of the current time window may also be preset. It should be understood that the length of the current time window may be the same as or different from the length of the prediction time window. For example, the length of the current time window may be set to one hour. If the prediction time window is from 8:00 to 8:10, the current time window may be from 7:00 to 8:00. It should be understood that the current time series data collected in the current time window may be understood as behavior data that has generated in the current time window, or behavior data that has generated in a time window adjacent to the prediction time window, so that time series data in any prediction time window can be more accurately predicted by using the current time series data.

A specific quantity of the plurality of historical time periods may be set based on an actual requirement. For example, the quantity may be set to any value between 3 and 10. This is not limited in this embodiment of this application. It should be understood that a period unit of the historical time period is the same as a period unit of the current time period. For example, if the period unit is "day", a plurality of groups of historical time series data that are separately collected in a same target time window of past three days may be obtained.

A length and a range of the target time window depend on a length and a range that are jointly formed by the prediction time window and the prediction time window. For example, if the prediction time window is from 8:00 to 8:10, and the current time window is from 7:00 to 8:00, the target time window is from 7:00 to 8:10, three groups of historical request traffic that are separately collected from 7:00 to 8:10 in past three days may be obtained, and each group of historical request traffic may include request traffic generated per minute from 7:00 to 8:10 every day.

In consideration that actually collected original time series data is usually a one-dimensional series, a series length of each piece of to-be-processed time series data is long, which affects subsequent processing efficiency of an encoder and a decoder. In a possible implementation, obtaining the current time series data collected in the current time window that is adjacent to and precedes the prediction time window in the current time period includes: obtaining current original time series data collected in the current time window, and folding, based on a preset folding ratio, the current original time series data into current time series data in at least two dimensions, where a dimension of the current time series data is greater than that of the current original time series data; and
obtaining the plurality of groups of historical time series data separately collected in the same target time window of the plurality of historical time periods includes: obtaining each group of historical original time series data collected in the same target time window in each historical time period, and folding, based on the preset folding ratio, each group of historical original time series data into historical time series data in at least two dimensions, where a dimension of the historical time series data is greater than that of the historical original time series data. In this manner, the encoder and the decoder can process longer time series data, that is, have a higher data throughput, so that subsequent processing efficiency of the encoder and the decoder can be improved, and no downsampling operation is required, thereby helping ensure precision of time series prediction.

The folding ratio indicates scales of converted series data in different dimensions, for example, may indicate a length or a height in a two-dimensional scale, or may indicate a length, a height, and/or a width in a three-dimensional scale. Folding is to convert low-dimensional data into higher-dimensional data by using the preset folding ratio, for example, convert one-dimensional data into two-dimensional data or three-dimensional data.

For example, if one-dimensional original series data is folded into two-dimensional series data at a folding ratio F, a scale of the original series data may be converted from [original_length] into [original_length/F, F]. For example, if one-dimensional series data {1, 2, 3, 4, 5, 6} is folded at a folding ratio of 3, two-dimensional series data (namely, a two-dimensional matrix) of [[1, 2, 3], [4, 5, 6]] may be obtained, a length of the one-dimensional series data is 6, a length of the two-dimensional series data is 6/3=2, and a height is 3.

It should be understood that the folding operation may improve memory occupation space of an entire prediction model (including the encoder and the decoder), so that the entire prediction model allows longer time series data as an input. This is because the model includes an attention mechanism with a dot product as a basic operation, and the attention mechanism with the dot product as the basic operation is positively correlated with a square of a series length. Therefore, the folding operation can increase a series length that can be consumed by the model without losing time series data, which is equivalent to increasing a parallel computing amount of the model, and also accelerates a speed of training and inference of the entire prediction model.

Optionally, if the folded time series data still does not meet a dimension that can be processed by the encoder, the folded time series data may be further encoded into a model dimension (model dimension) that can be processed by the encoder. This is not limited in this embodiment of this application.

Step S202: Encode the plurality of groups of historical time series data by using a plurality of encoders respectively, to obtain a plurality of historical time series features respectively corresponding to the plurality of groups of historical time series data, where each historical time series feature represents relative location information and change trend information of each group of historical time series data in the target time window.

A quantity of encoders may depend on a quantity of groups of historical time series data, and encoding processing is separately performed on the plurality of groups of historical time series data by using the plurality of encoders at the same time. In this way, encoding efficiency can be improved, and prediction efficiency of the time series data can be improved. The encoder may extract and retain the relative location information and the change trend information of the historical time series data, so that the decoder comprehensively uses relative location information and change trend information of a plurality of historical time series features for prediction, and can obtain a more accurate prediction result in a long-period time series prediction task.

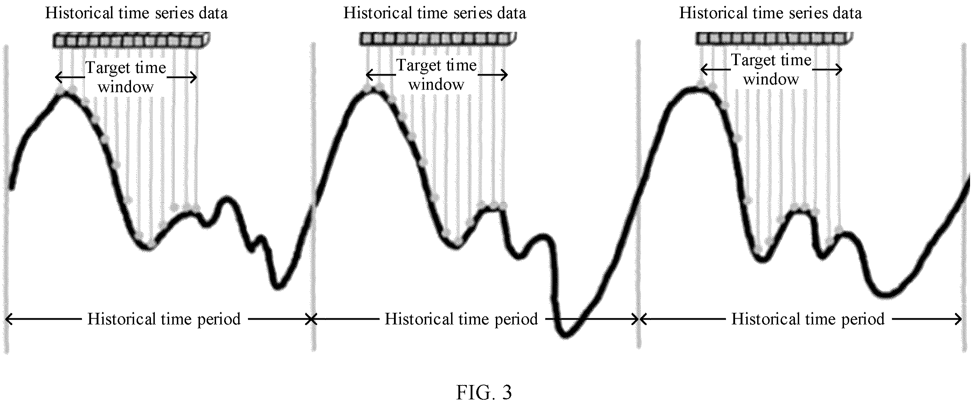

The relative location information represents a relative location relationship between historical time series data at the time points in the target time window, or represents a context relationship between historical time series data at the time points. The change trend information represents change trends of historical time series data at the time points in the target time window. For example, a curve in FIG. 3 shows change trends of the plurality of groups of historical time series data in the target time window. In other words, change trend information corresponding to each group of historical time series data may represent a change trend shown by the curve in each target time window in FIG. 3.

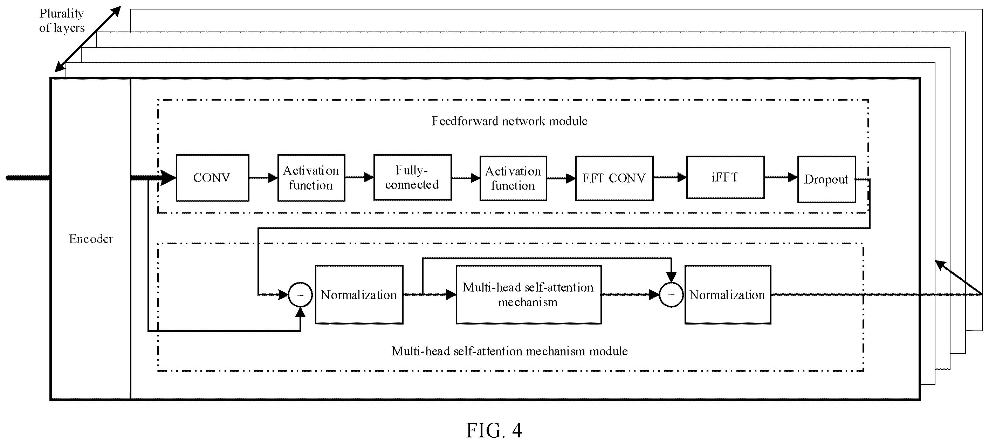

FIG. 4 is a diagram of a structure of an encoder according to an embodiment of this application. As shown in FIG. 4, the encoder may include a plurality of encoding layers, and each encoding layer may include a feedforward network module and a multi-head self-attention mechanism module. The feedforward network module may include at least one of the following: a convolution (CONV) unit, a fully connected unit (namely, a dense projection (dense projection)), a Fourier transform convolution (FFT CONV) unit, an inverse Fourier transform (iFFT, which is also referred to as inverse Fourier transform) unit, a dropout (dropout) unit, and a plurality of activation function units. The multi-head self-attention mechanism module may include at least one of the following: a skip connection (skip connection) unit, that is, "+", a normalization (layer norm) unit, and a multi-head self-attention mechanism (Multi-head Self-attention) unit.

The convolution unit is configured to perform convolution processing on an input, the fully connected unit is configured to perform dense projection processing on an input, the Fourier transform convolution unit is configured to perform Fourier transform and convolution processing on an input feature, the inverse Fourier transform unit is configured to perform inverse Fourier transform on an input, the dropout unit is configured to perform random deactivation on a part of nodes in the encoder, to optimize the encoder to prevent overfitting of the encoder, and the activation function unit is configured to perform activation processing on an input by using an activation function (for example, a Gelu function or a Relu function). It should be understood that a unit other than the Fourier transform convolution unit in the feedforward network module may be an optional unit. A person skilled in the art may adaptively adjust a model structure of the feedforward network module under the enlightenment of this embodiment of this application, for example, may remove the dropout unit, or may add any processing unit known in the art. This is not limited in this embodiment of this application.

FFT CONV is used in the encoder, so that a series length of input time series data is flexible and variable. In addition, an FFT CONV structure may be used to extract feature information of the input data in frequency domain, and still maintain series information of original time series data. Fourier transform using FFT CONV may convert the input data from a time domain to a frequency domain, a one-dimensional convolution operator (including a parameter obtained through training) performs convolution processing such as integration and enhancement on data in frequency domain space, and then a frequency domain feature may be restored to a time domain feature by the inverse Fourier transform (iFFT) unit. A feedforward network module using FFT CONV may establish a relationship between similar frequency components by using frequency information of the input data in frequency domain, to break through a limitation that an input/output size needs to be fixed in a conventional convolution model.

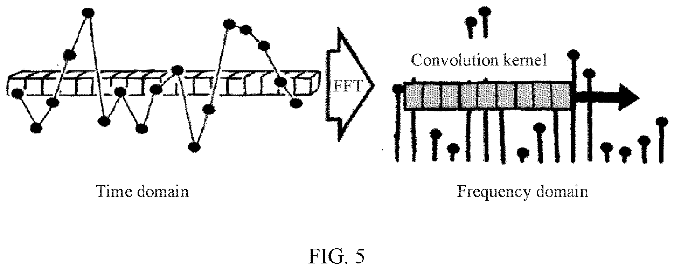

As shown in FIG. 5, a processing process of the FFT CONV unit may include: first performing Fourier transform FFT processing on data input to a time domain, and then inputting transformed data to a standard one-dimensional convolution kernel. A convolution operator of the one-dimensional convolution kernel may be used to implement a flexible and variable input/output series length. Due to a convolution property, the FFT CONV unit may be used to capture a relationship between signal strength of similar frequencies in frequency domain, and still maintain the series information of the original time series data. Certainly, a correlation of a time series in each period may also be extracted through standard time-based convolution, so that correlation information is not lost in a subsequent processing process.

It should be noted that the Fourier transform mentioned in this embodiment of this application may include but is not limited to various Fourier transform operations such as discrete Fourier transform (for example, fast Fourier transform) and continuous Fourier transform. A person skilled in the art may design a Fourier transform operation used in the encoder based on an actual requirement. This is not limited in this embodiment of this application.

The multi-head self-attention mechanism module is configured to generate the historical time series feature by using a multi-head self-attention mechanism. Specifically, a 1^{st} skip connection in the module is used to add an input of an encoding layer to a feature output by the feedforward network module, and further input the feature after the skip connection to a 1^{st} normalization unit, and a 2^{nd} skip connection is used to add the feature output by the 1^{st} normalization unit to a feature output by the multi-head self-attention mechanism unit, and further input the feature after the skip connection to a 2^{nd} normalization unit. Each normalization unit is configured to perform normalization processing on the input, and the multi-head self-attention mechanism unit is configured to perform multi-head self-attention processing on the input. It should be understood that a unit other than the multi-head self-attention mechanism unit in the multi-head self-attention mechanism module may be an optional unit. A person skilled in the art may adaptively adjust a model structure of the multi-head self-attention mechanism module under the enlightenment of this embodiment of this application, for example, may remove the skip connection unit, or may add any processing unit known in the art. This is not limited in this embodiment of this application.

It should be understood that historical time series data is input to a 1^{st} encoding layer of each encoder, an output of the 1^{st} encoding layer is input to a 2^{nd} encoding layer, ..., an output of an (i-1)^{th} encoding layer is input to an i^{th} encoding layer, where i is greater than or equal to 2 and less than a total quantity of encoding layers. An encoding processing process of each encoding layer is similar, and a feature output by a last encoding layer of the encoder may be used as a historical time series feature.

Based on the encoder shown in FIG. 3, encoding the plurality of groups of historical time series data by using the plurality of encoders, to obtain the plurality of historical time series features respectively corresponding to the plurality of groups of historical time series data includes: for an encoder corresponding to any group of historical time series data, inputting the historical time series data to a feedforward network module of the encoder, and outputting an intermediate time series feature; and inputting the intermediate time series feature and the historical time series data to the multi-head self-attention mechanism module, and outputting a historical time series feature corresponding to the historical time series data. It should be understood that the encoding process may include the encoding process of the 1^{st} encoding layer. For another encoding layer, the output feature of the (i-1)^{th} encoding layer may be used as historical time series data input to the i^{th} encoding layer, at least one round of encoding processing is performed, and the output feature of the last encoding is used as the historical time series feature output by the encoder. In this manner, the relative location information and the change trend information in the historical time series data can be effectively extracted by using the encoder.

It should be noted that the encoder shown in FIG. 4 is a possible implementation provided in this embodiment of this application. Actually, a person skilled in the art may alternatively encode the historical time series data by using another encoder known in the art, provided that the historical time series feature can be extracted. This is not limited in this embodiment of this application.

Step S203: Determine, by using a decoder based on the plurality of historical time series features and the current time series data, predicted time series data corresponding to the target object in the prediction time window, where the predicted time series data includes predicted behavior data of the target object at a plurality of time points in the prediction time window.

During actual application, a structure in which one decoder corresponds to a plurality of encoders may be used, and one decoder is used to determine, based on the plurality of historical time series features and the current time series data, the predicted time series data corresponding to the target object in the prediction time window. Alternatively, a structure in which a plurality of decoders corresponds to a plurality of encoders may be used, that is, each decoder may be responsible for predicting a part of time series data. This is not limited in this embodiment of this application.

The decoder may include a plurality of decoding layers. The historical time series feature output by each encoder may include a plurality of time series sub-features, or may include a plurality of projections. A total quantity of time series sub-features in each historical time series feature is equal to a total quantity of decoding layers in the decoder. Therefore, the time series sub-features in the plurality of historical time series features may be separately provided for corresponding decoding layers, that is, the encoder separately outputs a part of feature information of the historical time series data to different encoding layers of the decoder, to provide an effective basis for the decoder to perform time series prediction in a future period of time, so that series information of the time series data can be retained, a change trend of long-term time series data can be sensed, and impact of an accumulated error is reduced. For example, if four encoders are used to encode historical time series data of past D=4 days, and the decoder has J=8 decoding layers, all the four encoders output 4*8=32 dense projections (namely, time series sub-features) in total.

In view of this, in a possible implementation, if the encoder is set to include J decoding layers, each historical time series feature includes J time series sub-features, and J is a positive integer, determining, by using the decoder based on the plurality of historical time series features and the current time series data, the predicted time series data corresponding to the target object in the prediction time window includes:
inputting the current time series data and a 1^{st} time series sub-feature of each historical time series feature to a 1^{st} decoding layer of the decoder, and outputting a 1^{st} predicted time series feature;
inputting, to a j^{th} decoding layer of the decoder, a (j-1)^{th} predicted time series feature output by a (j-1)^{th} decoding layer and a j^{th} time series sub-feature of each historical time series feature, and outputting a j^{th} predicted time series feature, where j∈[2, J]; and
determining the predicted time series data based on a J^{th} predicted time series feature output by a J^{th} decoding layer of the decoder and the prediction time window.

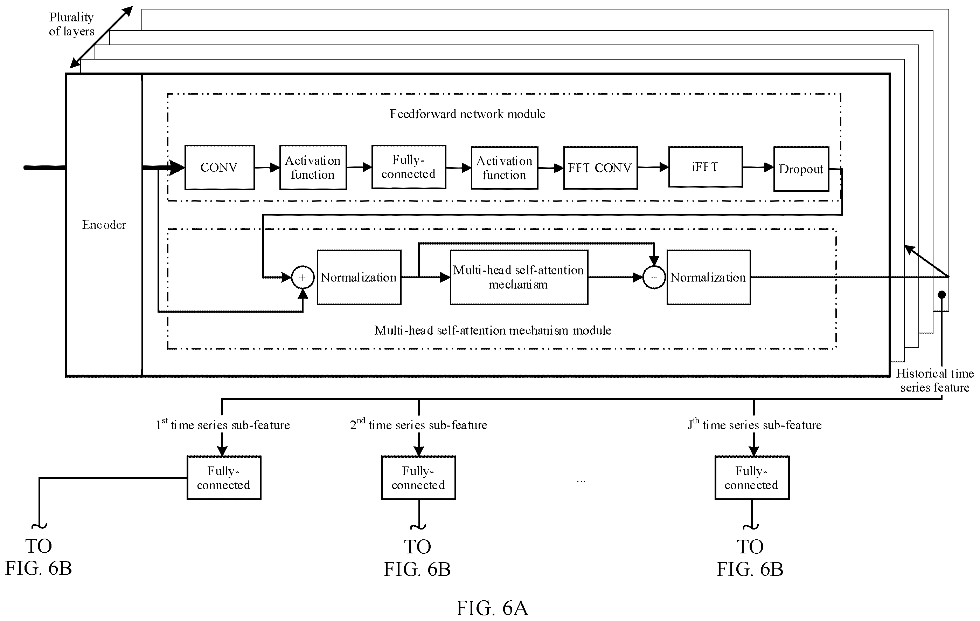

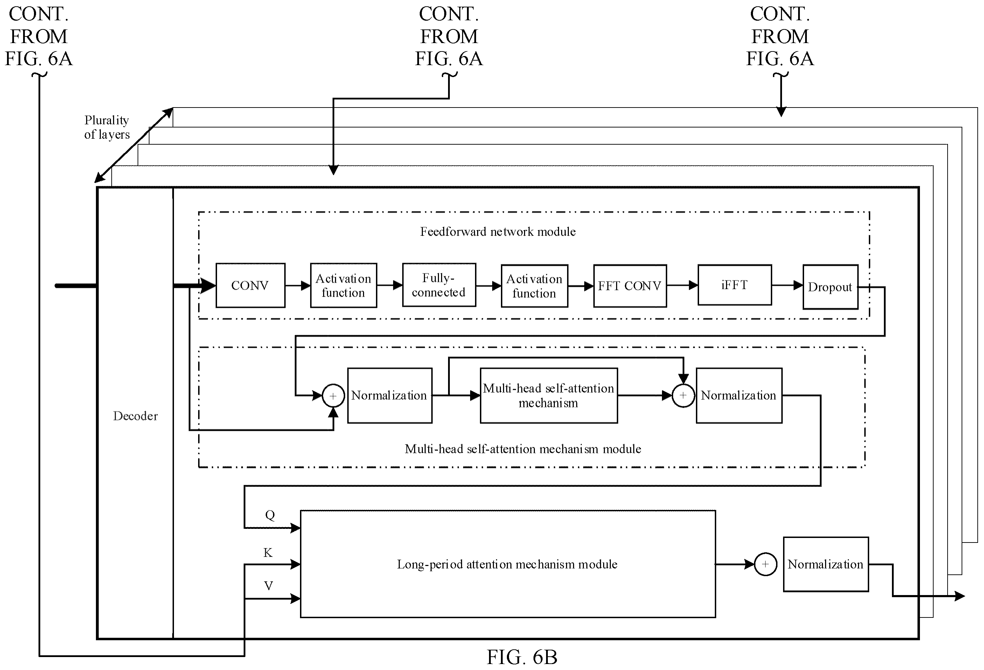

The foregoing determining process is explained by using the decoder shown in FIG. 6A and FIG. 6B. As shown in FIG. 6A and FIG. 6B, the decoder may include a plurality of decoding layers, and each decoding layer includes a feedforward network module, a multi-head self-attention mechanism module, and a long-period attention mechanism module. The feedforward network module and the multi-head self-attention mechanism module in the decoder may be the same as those in the structure of the encoder shown in FIG. 4, and details are not described herein again. The current time series data is input to a feedforward network module and a multi-head self-attention mechanism module of the 1^{st} decoding layer of the decoder, and starting from a 2^{nd} decoding layer, the feature output by the (j-1)^{th} decoding layer is input to a feedforward network module and a multi-head self-attention mechanism of the j^{th} decoding layer; and a feature output by the multi-head self-attention mechanism module and the plurality of time series sub-features that correspond to each decoding layer and that are in the plurality of historical time series features are input to the long-period attention mechanism module of each decoding layer. For example, a feature (equivalent to Q) output by the multi-head self-attention mechanism module of the 1^{st} decoding layer, 1^{st} time series sub-features (equivalent to K and V) of the plurality of historical time series features, and so on are input to a long-period attention mechanism module of the 1^{st} decoding layer. For example, each time series sub-feature, of a historical time series feature, output by a last decoding layer of the decoder in FIG. 6A and FIG. 6B is projected to each corresponding decoding layer of the decoder through dense projection (namely, full-connected processing).

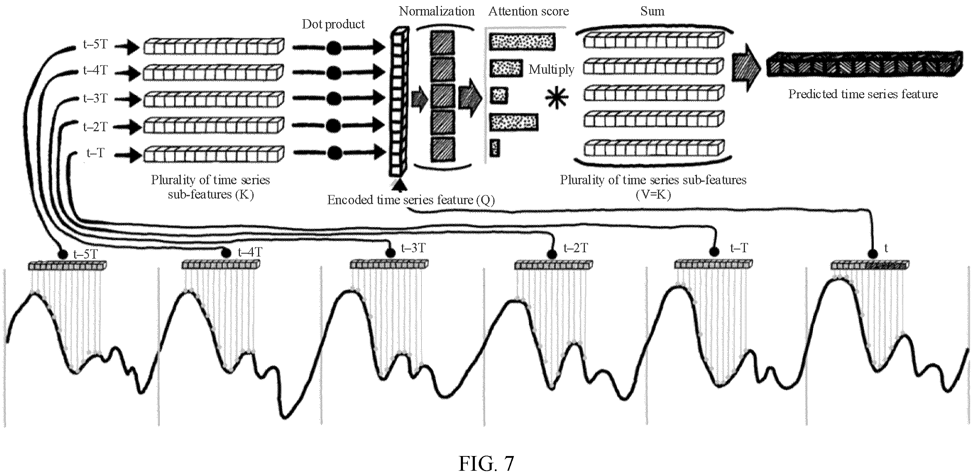

FIG. 7 is a diagram of a processing process of a long-period attention mechanism module according to an embodiment of this application. As shown in FIG. 7, t represents the current time period, T represents a period unit (for example, "day"), t-T to t-5T represent five historical time periods, and time series sub-features of a historical series feature corresponding to each historical time period are used as a key K (key) and a value V (value) of the attention mechanism. An encoded time series feature obtained after the feedforward network module and the multi-head self-attention mechanism module encode the current time series data corresponding to the current time period t is used for query Q (query), a similarity between the query Q and each key K is computed in a dot product manner, an attention score (namely, an attention weight) corresponding to each key K is output after each similarity is normalized by using a softmax function, and then weighted summation is performed on a plurality of time series sub-features (namely, a plurality of values V=key K) based on the attention weight separately corresponding to each key K, to obtain a predicted time series feature output by the long-period attention mechanism module.

The long-period attention mechanism is used, so that it is equivalent to that each encoded historical time series feature may be used as K and V of the attention mechanism, and the encoded time series feature of current time series data is used as the query V. Therefore, the output of the long-period attention may be understood as a weighted sum of the plurality of historical time series features. Each decoding layer of the decoder receives the key K and the value V from the encoder as a projection basis, and computes an attention based on historical series features of past several days, instead of computing an attention by using a time series feature at each time point in the past. This undoubtedly retains ordering of the original time series data. Alternatively, on a premise that a data period is known (for example, periodic data related to a day/night activity behavior of a person), historical time series feature information of past several historical periods can be extracted, to obtain a traffic trend in a long time period of several days and several weeks, a key K and a value V of each piece of historical time series data can be output, valid feature information obtained after FFT convolution in the current time period (namely, a time period that needs to be predicted) is used as a value Q, values K in all historical time periods are queried, a similarity between the historical time period and the current time period is computed in a dot product manner, normalization processing is performed by using a softmax function, to obtain different attention weights based on different historical time periods, and weighted summation is performed on values V of the plurality of historical time periods by using different attention weights, to obtain predicted time series data in a prediction time window in the current time period. The long-period attention mechanism is used, so that the decoder can use only a short-length time series for inference, without using a time series of a complete time period as an input; different from a conventional attention mechanism, the long-period attention mechanism retains relative location information in the time series; different from a conventional autoregression model, the long-period attention mechanism greatly reduces impact of an accumulated error, and makes more accurate prediction; and the long-period attention mechanism may search for a similarity between the current time series data series of the current time period and the historical time series data of the historical time period for learning, and predict a size of future time series data on a larger scale.

Based on FIG. 6A and FIG. 6B and FIG. 7, inputting the current time series data and the 1^{st} time series sub-feature of each historical time series feature to the 1^{st} decoding layer of the decoder, and outputting the 1^{st} predicted time series feature includes: encoding the current time series data, to obtain a 1^{st} encoded time series feature; determining, based on a similarity between the 1^{st} time series sub-feature of each historical time series feature and the 1^{st} encoded time series feature, an attention weight corresponding to the 1^{st} time series sub-feature of each historical time series feature; and performing weighted summation on the 1^{st} time series sub-feature of each historical time series feature based on the attention weight corresponding to the 1^{st} time series sub-feature of each historical time series feature, to obtain the 1^{st} predicted time series feature.

In addition, inputting, to the j^{th} decoding layer of the decoder, the (j-1)^{th} predicted time series feature output by the (j-1)^{th} decoding layer and the j^{th} time series sub-feature of each historical time series feature, and outputting the j^{th} predicted time series feature includes: encoding the (j-1)^{th} predicted time series feature, to obtain a j^{th} encoded time series feature; determining, based on a similarity between the j^{th} time series sub-feature of each historical time series feature and the j^{th} encoded time series feature, an attention weight corresponding to the j^{th} time series sub-feature of each historical time series feature; and performing weighted summation on the j^{th} time series sub-feature of each historical time series feature based on the attention weight corresponding to the j^{th} time series sub-feature of each historical time series feature, to obtain the j^{th} predicted time series feature.

The current time series data may be encoded by the feedforward network module and the multi-head self-attention mechanism module of the 1^{st} decoding layer of the decoder, to obtain the 1^{st} encoded time series feature; and the (j-1)^{th} predicted time series feature is encoded by the feedforward network module and the multi-head self-attention mechanism module of the j^{th} decoding layer, to obtain the j^{th} encoded time series feature. It should be understood that the current time series data and the (j-1)^{th} predicted time series feature may be encoded with reference to specific encoding manners in the feedforward network module and the multi-head self-attention mechanism module in the encoder. Details are not described herein again.

With reference to a specific implementation of the long-period attention mechanism module shown in FIG. 7, each decoding layer may determine, based on a similarity between a time series sub-feature of each historical time series feature and an encoded time series feature, an attention weight corresponding to the time series sub-feature of each historical time series feature, and perform weighted summation on the time series sub-feature of each historical time series feature based on the attention weight corresponding to the time series sub-feature of each historical time series feature, to obtain a predicted time series feature. It should be understood that a person skilled in the art may compute the similarity between the encoded time series feature and each time series sub-feature in a similarity computing manner known in the art. This is not limited in this embodiment of this application. After the similarity between the encoded time series feature and each time series sub-feature is computed, the similarity may be normalized into an interval of [0, 1] by using a softmax function, to obtain the attention weight corresponding to each time series sub-feature. Then, weighted summation is performed on each time series sub-feature based on the attention weight, to obtain the predicted time feature.

It should be understood that because the attention weight is equivalent to being computed based on a time series sub-feature of past several days, ordering of historical time series data is retained. Therefore, behavior data in a specific future time period may be predicted by using only short-length historical time series data, without using complete historical time series data in an entire historical time period as an input; and impact of an accumulated error can be reduced, and a similarity between a current time series of the current time period and a historical time series of the historical time period can be searched for learning, so that time series data in a specific future time period can be predicted on a large time scale.

During actual application, because historical time series features in past several periods need to be inevitably extracted during periodic prediction of long-period time series data, a trend of a future period on a large scale may also be predicted in a manner of a variance and a mean value, a multilayer perceptron (MLP, Multilayer Perceptron), or the like. The long-period attention module in this embodiment of this application learns a similarity between several segments of time series data in a historical period by using an attention mechanism, and better time series prediction precision can be obtained compared with the foregoing manners.

In consideration that a size (including a scale, a dimension, or the like) of the J^{th} predicted time series feature output by the J^{th} decoding layer of the decoder may be inconsistent with that of the original time series data, the J^{th} predicted time series feature output by the J^{th} decoding layer may be projected back to a predicted time series feature of a same size as the historical time series data. For example, a high-dimensional predicted time series feature is projected back to a two-dimensional predicted time series feature, and then the predicted time series feature that is projected is unfolded, based on the foregoing preset folding ratio, into a predicted time series feature that is in a same dimension as the original time series data. For example, the two-dimensional predicted time series feature is unfolded into a one-dimensional predicted time series feature, to match a data format of the original time series data.

In addition, because the historical time series data is selected based on the target time window, a series length of a one-dimensional series converted from the predicted time series feature determined by using the historical time series feature may be the same as that of the historical time series data, and the user may need only the predicted time series feature in the prediction time window as the predicted time series data. Therefore, a time series feature in the predicted time series feature in the prediction time window may be selected as the predicted time series data based on the prediction time window.

In view of this, determining the predicted time series data based on the J^{th} predicted time series feature output by the J^{th} decoding layer of the decoder and the prediction time window may include: projecting the J^{th} predicted time series feature back to a predicted time series feature of a same size as the historical time series data; unfolding, based on the foregoing preset folding ratio, the predicted time series feature that is projected into a predicted time series feature of a same dimension as the original time series data; and selecting, from the unfolded predicted time series feature based on the prediction time window, a part of predicted time series features in the foregoing prediction time window as the predicted time series data. It should be understood that if the original time series data is not folded by using the folding ratio in step S201, the part of predicted time series features in the foregoing prediction time window may be directly selected from the predicted time series feature that is projected as the predicted time series data based on the prediction time window.

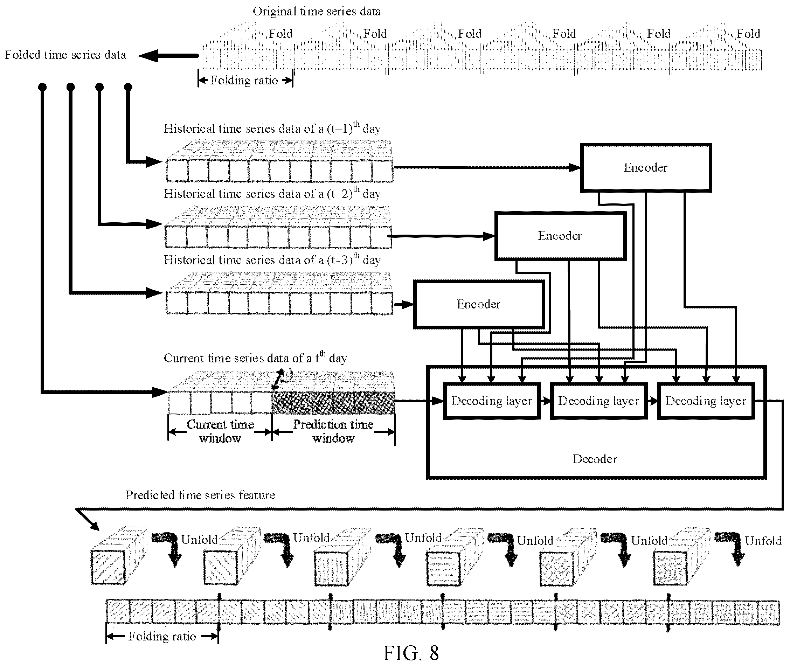

Based on the foregoing step S201 to step S203, an embodiment of this application further provides a diagram of a framework of a time series data prediction system shown in FIG. 8. As shown in FIG. 8, it is assumed that three encoders are used, three decoding layers are used in a decoder, and current original time series data of today t and historical original time series data of past three days (including data of a (t-1)^{th} day to a (t-3)^{th} day) are used. First, original time series data (including the historical original time series data of the past three days and the current original time series data of today) is separately folded based on a preset folding ratio, to obtain folded time series data (including historical time series data of the past three days and current time series data). Alternatively, after the folded time series data is encoded into a model dimension that can be processed by the encoder in advance, each group of historical time series data having the model dimension is input to a corresponding encoder, each encoder encodes each piece of historical time series data, and outputs time series sub-features in encoded historical time series features to different decoding layers of the decoder, the time series sub-feature is used as an input of a long-period attention mechanism model in the decoder, the current time series data is input to the decoder, and the decoder is used to predict the time series data in a prediction time window. After a prediction time feature output by the decoder is obtained, the predicted time series feature may be further unfolded, based on the foregoing folding ratio, to a predicted time series feature that is in a same dimension as the original time series data, to match a data format of the original time series data.

As shown in FIG. 8, the encoder and the decoder are in a many-to-one hierarchical link architecture, that is, a plurality of encoders correspond to one decoder and respectively correspond to encoding layers in the decoder. The plurality of encoders separately use historical time series data obtained after target time windows of a plurality of historical time periods are folded as an input, and extract a historical time series feature by using at least Fourier transform convolution (FFT CONV) in the encoder. This process is also encoding. After encoding, a part of feature information of the historical time series feature is separately output to different decoding layers of the decoder as an input of a long-period attention mechanism of each decoding layer. After the historical time series feature information is provided for the decoder, the current time series data series in the current time window is input to the decoder, to complete prediction of time series data in a future period of time. The plurality of encoders may learn and retain local relative location information and global change trend information of historical time series data in historical several days, so that the decoder can comprehensively determine a historical time series feature of historical time series data in a same historical time period of a plurality of days, and prediction of fine-granularity and long-period (for example, several days or several weeks) time series data is more accurate and efficient.

As described above, the target object includes a user request, the behavior data includes request traffic of the user request, and the predicted time series data includes predicted request traffic of the user request at the plurality of time points in the prediction time window. In a possible implementation, after obtaining the predicted time series data, the method further includes: scheduling, based on the predicted request traffic of the user request at the plurality of time points in the prediction time window, a computing resource used to process the user request, so that the scheduled computing resource adapts to the predicted request traffic. The computing resource may be scheduled in advance before the prediction time window arrives. In this manner, the request traffic of the user request can be predicted, and a traffic change trend can be considered in three dimensions: a long-time series (week and month), a periodicity (day), and real-time performance, to achieve more accurate fine-granularity and long time series prediction. This can reduce a quantity of times of cold start of a cloud platform, bring a low response delay to the user request, and reduce a waste of computing resources on a platform side.

As described above, the target object includes a traffic area, the behavior data includes vehicle traffic in the traffic area, and the predicted time series data includes predicted vehicle traffic in the traffic area at the plurality of time points in the prediction time window; and after obtaining the predicted time series data, the method further includes: adjusting, in advance, a traffic signal timing scheme of a traffic signal light in the traffic area in the prediction time window based on the predicted vehicle traffic in the traffic area at the plurality of time points in the prediction time window, so that the adjusted traffic signal timing scheme adapts to the predicted vehicle traffic. The traffic signal timing scheme of the traffic signal light may be adjusted in advance before the prediction time window arrives. In this manner, the vehicle traffic in the traffic area can be predicted, and the traffic signal configuration scheme can be adjusted based on the predicted vehicle traffic, so that the adjusted traffic signal timing scheme adapts to the predicted vehicle traffic, traffic in the entire traffic area can be smooth, a traffic flow rate can be increased, and traffic congestion can be reduced.

According to this embodiment of this application, which time series data in the historical time period is important can be known a priori based on the prediction time window and the current time window. Then, the plurality of encoders separately use the historical time series data in the target time window of the plurality of historical time periods as an input; and after encoding, output the relative location information and the change trend information of the historical time series data to different encoding layers of the decoder, to provide an effective basis for the decoder to perform time series prediction in a future period of time, that is, use important historical series data in a same past target time window, to predict a series trend of the prediction time window in the current time period. In this way, all historical time series data in the historical time periods does not need to be used, and fine-granularity and long-period time series prediction can be efficiently and accurately implemented.

The time series data prediction method according to this embodiment of this application is equivalent to predicting in a future time window by using historical time series data in a same target time window of a plurality of past historical time periods. A time series data folding technology can significantly reduce training time of the entire prediction model (including the encoder and the decoder), and improve a data throughput and inference efficiency of the entire prediction model in an inference process. This means that time series data folded at the preset folding ratio (for example, a period of 86400 per day is converted into a period of 1440 by using F=60 of data per second) cannot support the entire prediction model in ingesting all historical time series data of past several historical time periods. Therefore, the prediction model may receive short time series data that is centered on a current time point, and use historical time series data in a same target time window of several historical days as an inference input of the model.

According to the time series data prediction method in this embodiment of this application, the time series data such as upcoming request traffic or upcoming vehicle traffic is predicted by using the historical time series data in the same target time window of the plurality of historical time periods. Folding the original time series data may increase a data amount (a throughput) that can be input to the entire prediction model and accelerate a training speed. Second, the plurality of encoders are used to encode the historical period data, and obtained local series feature information is transferred to different encoding layers of the decoder in a distributed manner. An FFT convolution structure is used inside the encoder and the decoder, so that a length of an input time series is flexible and variable, and the FFT convolution structure may extract all feature information of input data. Finally, the long-period attention mechanism is used, so that the decoder can retain the series information of the input series, perceive a long-term traffic trend, and reduce an accumulated error compared with a conventional autoregressive model.

The time series data prediction method according to this embodiment of this application may be used to predict user traffic of various cloud platforms oriented to the user. When the user request has a specific periodic rule, for example, a traffic trend conforms to a human activity schedule, the time series data prediction method in this embodiment of this application may be used to more accurately predict a traffic volume in a future prediction time window, and more accurately prepare a computing resource such as a function instance and a container based on the data, so that a processing result required by the user can be returned with a lower processing delay, and a waste of resources caused by container expansion is reduced.

The time series data prediction method according to this embodiment of this application may be further applied to various container management platforms (for example, Kubernetes). In consideration that the platform is user-oriented, when traffic has a periodicity with "day" as a period unit, the time series data prediction method in this embodiment of this application can be deployed on various management platforms that use a function as a minimum granularity or a container as a minimum granularity, to implement effect of starting a function instance in advance to avoid cold start of a container and reduce a reserved instance on a platform.

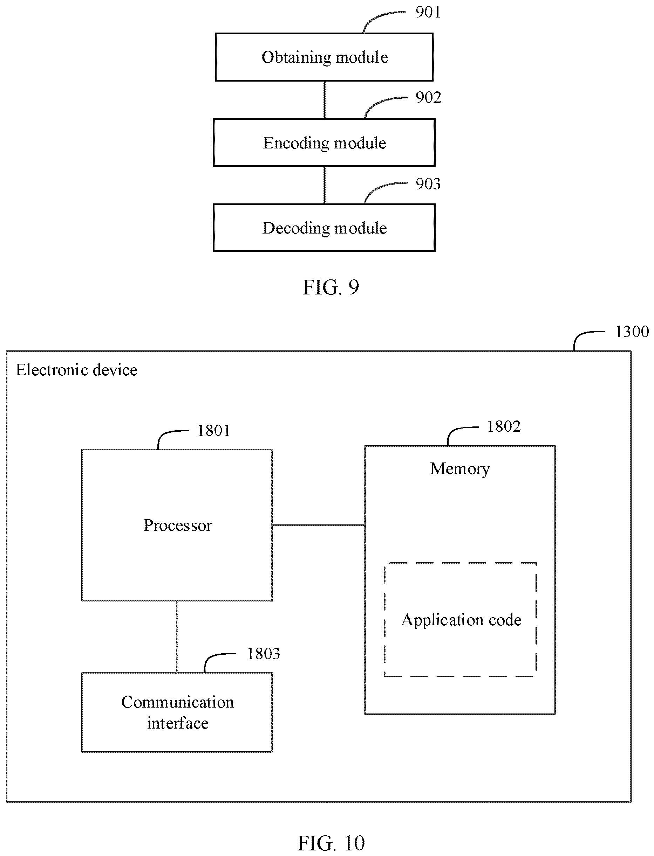

FIG. 9 is a diagram of a structure of a time series data prediction apparatus according to an embodiment of this application. The apparatus may be used in the foregoing time series data prediction system 100. As shown in FIG. 9, the apparatus includes:
an obtaining module 901, configured to: in a prediction time window set for a to-be-predicted target object in a current time period, obtain current time series data collected in a current time window that is adjacent to and precedes the prediction time window in the current time period, and obtain a plurality of groups of historical time series data separately collected in a same target time window of a plurality of historical time periods, where the target time window includes the prediction time window and the current time window, and time series data includes generated behavior data of the target object at a plurality of time points in a time window;
an encoding module 902, configured to encode the plurality of groups of historical time series data by using a plurality of encoders respectively, to obtain a plurality of historical time series features respectively corresponding to the plurality of groups of historical time series data, where each historical time series feature represents relative location information and change trend information of each group of historical time series data in the target time window; and
a decoding module 903, configured to determine, by using a decoder based on the plurality of historical time series features and the current time series data, predicted time series data corresponding to the target object in the prediction time window, where the predicted time series data includes predicted behavior data of the target object at a plurality of time points in the prediction time window.

According to this embodiment of this application, which time series data in the historical time period is important can be known a priori based on the prediction time window and the current time window. Then, the plurality of encoders separately use the historical time series data in the target time window of the plurality of historical time periods as an input; and after encoding, output the relative location information and the change trend information of the historical time series data to different encoding layers of the decoder, to provide an effective basis for the decoder to perform time series prediction in a future period of time, that is, use important historical series data in a same past target time window, to predict a series trend of the prediction time window in the current time period. In this way, all historical time series data in the plurality of historical time periods does not need to be used, and fine-granularity and long-period time series prediction can be efficiently and accurately implemented.

In a possible implementation, the decoder includes J decoding layers, each historical time series feature includes J time series sub-features, J is a positive integer, and determining, by using the decoder based on the plurality of historical time series features and the current time series data, the predicted time series data corresponding to the target object in the prediction time window includes: inputting the current time series data and a 1^{st} time series sub-feature of each historical time series feature to a 1^{st} decoding layer of the decoder, and outputting a 1^{st} predicted time series feature; inputting, to a j^{th} decoding layer of the decoder, a (j-1)^{th} predicted time series feature output by a (j-1)^{th} decoding layer and a j^{th} time series sub-feature of each historical time series feature, and outputting a j^{th} predicted time series feature, where j∈[2, J]; and determining the predicted time series data based on a J^{th} predicted time series feature output by a J^{th} decoding layer of the decoder and the prediction time window.

According to this embodiment of this application, time series sub-features of the plurality of historical time series features are respectively provided to corresponding decoding layers, that is, the encoder separately outputs a part of feature information of the historical time series data to different encoding layers of the decoder, to provide the effective basis for the decoder to perform time series prediction in the future period of time, so that series information of the historical time series data can be retained, a change trend of long-term time series data can be sensed, and impact of an accumulated error can be reduced.

In a possible implementation, inputting the current time series data and the 1^{st} time series sub-feature of each historical time series feature to the 1^{st} decoding layer of the decoder, and outputting the 1^{st} predicted time series feature includes: encoding the current time series data, to obtain a 1^{st} encoded time series feature; determining, based on a similarity between the 1^{st} time series sub-feature of each historical time series feature and the 1^{st} encoded time series feature, an attention weight corresponding to the 1^{st} time series sub-feature of each historical time series feature; and performing weighted summation on the 1^{st} time series sub-feature of each historical time series feature based on the attention weight corresponding to the 1^{st} time series sub-feature of each historical time series feature, to obtain the 1^{st} predicted time series feature.

According to this embodiment of this application, the decoder can use only a short-length time series for inference, without using a time series of a complete time period as an input; and relative location information in the time series can be retained, thereby greatly reducing impact of an accumulated error, and performing more accurate prediction, so that a similarity between the current time series data series of the current time period and the historical time series data of the historical time period can be searched for learning, and a size of future time series data can be predicted on a larger scale.

In a possible implementation, inputting, to the j^{th} decoding layer of the decoder, the (j-l)^{th} predicted time series feature output by the (j-1)^{th} decoding layer and the j^{th} time series sub-feature of each historical time series feature, and outputting the j^{th} predicted time series feature includes: encoding the (j-1)^{th} predicted time series feature, to obtain a j^{th} encoded time series feature; determining, based on a similarity between the j^{th} time series sub-feature of each historical time series feature and the j^{th} encoded time series feature, an attention weight corresponding to the j^{th} time series sub-feature of each historical time series feature; and performing weighted summation on the j^{th} time series sub-feature of each historical time series feature based on the attention weight corresponding to the j^{th} time series sub-feature of each historical time series feature, to obtain the j^{th} predicted time series feature.

According to this embodiment of this application, the decoder can use only a short-length time series for inference, without using a time series of a complete time period as an input; and relative location information in the time series can be retained, thereby greatly reducing impact of an accumulated error, and performing more accurate prediction, so that a similarity between the current time series data series of the current time period and the historical time series data of the historical time period can be searched for learning, and a size of future time series data can be predicted on a larger scale.

In a possible implementation, the encoder includes a feedforward network module and a multi-head self-attention mechanism module, the feedforward network module includes a Fourier transform convolution unit, the Fourier transform convolution unit is configured to perform Fourier transform and convolution processing on an input feature, and the multi-head self-attention mechanism module is configured to generate a historical time series feature by using a multi-head self-attention mechanism; and encoding the plurality of groups of historical time series data by using the plurality of encoders respectively, to obtain the plurality of historical time series features respectively corresponding to the plurality of groups of historical time series data includes: for an encoder corresponding to any group of historical time series data, inputting the historical time series data to a feedforward network module of the encoder, and outputting an intermediate time series feature; and inputting the intermediate time series feature and the historical time series data to the multi-head self-attention mechanism module, and outputting a historical time series feature corresponding to the historical time series data.

According to this embodiment of this application, the Fourier transform convolution processing is used in the encoder, so that a series length of input time series data is flexible and variable. In addition, feature information of the input data is extracted in frequency domain, and series information of the input time series data is still maintained; and in particular, a relationship may be established between similar frequency components by using frequency information of the input time series data in frequency domain, to break through a limitation that an input/output size needs to be fixed in a conventional convolution model.

In a possible implementation, obtaining the current time series data collected in the current time window that is adjacent to and precedes the prediction time window in the current time period includes: obtaining current original time series data collected in the current time window, and folding, based on a preset folding ratio, the current original time series data into current time series data in at least two dimensions, where the folding ratio indicates scales of folded series data in different dimensions, and a dimension of the current time series data is greater than that of the current original time series data; and obtaining the plurality of groups of historical time series data separately collected in the same target time window of the plurality of historical time periods includes: obtaining each group of historical original time series data collected in the same target time window in each historical time period, and folding, based on the preset folding ratio, each group of historical original time series data into historical time series data in at least two dimensions, where a dimension of the historical time series data is greater than that of the historical original time series data.

According to this embodiment of this application, memory occupation space of an entire prediction model (including the encoder and the decoder) can be improved, so that the encoder and the decoder process longer-time series data, and a series length that can be consumed by the model is increased. This is equivalent to increasing a parallel computing amount of the model, that is, having a higher data throughput. Therefore, subsequent processing efficiency of the encoder and the decoder can be improved, and no downsampling operation is required, which helps ensure precision of time series prediction.

In a possible implementation, the target object includes a user request, the behavior data includes request traffic of the user request, and the predicted time series data includes predicted request traffic of the user request at the plurality of time points in the prediction time window; and after obtaining the predicted time series data, the apparatus further includes: a scheduling module, configured to schedule, based on the predicted request traffic of the user request at the plurality of time points in the prediction time window, a computing resource used to process the user request, so that the scheduled computing resource adapts to the predicted request traffic.

According to this embodiment of this application, the request traffic of the user request can be predicted, and a traffic change trend can be considered in three dimensions: a long-time series (a week and a month), a periodicity (a day), and real-time performance, to achieve more accurate fine-granularity and long-period time series prediction. This can reduce a quantity of times of cold start of a cloud platform, bring a low response delay to the user request, and reduce a waste of computing resources on a platform side.

In a possible implementation, the target object includes a traffic area, the behavior data includes vehicle traffic in the traffic area, and the predicted time series data includes vehicle traffic predicted by the traffic area at a plurality of time points in the prediction time window; and after the predicted time series data is obtained, the apparatus further includes: an adjustment module, configured to adjust a traffic signal timing scheme of a traffic signal light in the traffic area in the prediction time window based on the vehicle traffic predicted by the traffic area at the plurality of time points in the prediction time window, so that an adjusted traffic signal timing scheme adapts to the predicted vehicle traffic.

According to this embodiment of this application, the vehicle traffic in the traffic area can be predicted, and the traffic signal configuration scheme can be adjusted based on the predicted vehicle traffic, so that the adjusted traffic signal timing scheme adapts to the predicted vehicle traffic, traffic in the entire traffic area can be smooth, a traffic flow rate can be increased, and traffic congestion can be reduced.

An embodiment of this application provides a time series data prediction apparatus. The time series data prediction apparatus includes a processor; and a memory, configured to store instructions executable by the processor. When the processor is configured to execute the instructions, the foregoing method is implemented.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium carrying computer-readable code. When the computer-readable code is run in a processor of an electronic device, the processor of the electronic device performs the foregoing method.

FIG. 10 is a diagram of a structure of an electronic device 1300 according to an embodiment of this application. As shown in FIG. 10, the electronic device 1300 may be a server or a terminal device, and performs a function in the time series data prediction method shown in any one of FIG. 2 to FIG. 8. The electronic device 1300 includes at least one processor 1801, at least one memory 1802, and at least one communication interface 1803. In addition, the electronic device may further include a general-purpose component such as an antenna. Details are not described herein again.

The following specifically describes the components of the electronic device 1300 with reference to FIG. 10.

The processor 1801 may be a general-purpose central processing unit (CPU), a microprocessor, an application-specific integrated circuit (application-specific integrated circuit, ASIC), or one or more integrated circuits for controlling execution of programs for the foregoing solutions. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, an Ethernet, a radio access network (RAN), a core network, or a wireless local area network (Wireless Local Area Network, WLAN).

The memory 1802 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the bus. The memory may alternatively be integrated with the processor.

The memory 1802 is configured to store application code for performing the foregoing solutions, and the processor 1801 controls execution of the application code. The processor 1801 is configured to execute the application code stored in the memory 1802.

In the foregoing embodiments, the descriptions of embodiments have respective focuses. For a part that is not described in detail in an embodiment, refer to related descriptions in other embodiments.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or flash memory), a static random access memory (Static Random-Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium, or downloaded to an external computer or external storage device through a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, may be executed partially on a user computer as a standalone software package, may be executed partially on a user computer and partially on a remote computer, or may be executed entirely on a remote computer or a server. In a case involving a remote computer, the remote computer may be connected to a user computer through any type of network, including a local area network (Local Area Network, LAN) or a wide area network (Wide Area Network, WAN), or may be connected to an external computer (for example, connected through the internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by using the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks of the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or flowcharts, and a combination of blocks of the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit can implement several functions enumerated in the claims. Some measures are recorded in dependent claims that are different from each other, but this does not mean that these measures cannot be combined to produce good effect.

The foregoing has described embodiments of this application. The foregoing descriptions are examples, not exhaustive, and are not limited to the disclosed embodiments. Without departing from the scope of the described embodiments, many modifications and variations are apparent to a person of ordinary skill in the technical field. The terms used in this specification are chosen to best explain the principles of embodiments, actual applications, or improvements to technologies in the market, or to enable another person of ordinary skill in the art to understand embodiments disclosed in this specification.

## Claims

1. A time series data prediction method, comprising:
in a prediction time window set for a to-be-predicted target object in a current time period, obtaining current time series data collected in a current time window that is adjacent to and precedes the prediction time window in the current time period, and obtaining a plurality of groups of historical time series data separately collected in a same target time window of a plurality of historical time periods, wherein the target time window comprises the prediction time window and the current time window, and time series data comprises generated behavior data of the target object at a plurality of time points in a time window;
encoding the plurality of groups of historical time series data by using a plurality of encoders respectively, to obtain a plurality of historical time series features respectively corresponding to the plurality of groups of historical time series data, wherein each historical time series feature represents relative location information and change trend information of each group of historical time series data in the target time window; and
determining, by using a decoder based on the plurality of historical time series features and the current time series data, predicted time series data corresponding to the target object in the prediction time window, wherein the predicted time series data comprises predicted behavior data of the target object at a plurality of time points in the prediction time window.

2. The method according to claim 1, wherein the decoder comprises J decoding layers, each historical time series feature comprises J time series sub-features, J is a positive integer, and determining, by using the decoder based on the plurality of historical time series features and the current time series data, the predicted time series data corresponding to the target object in the prediction time window comprises:
inputting the current time series data and a 1^{st} time series sub-feature of each historical time series feature to a 1^{st} decoding layer of the decoder, and outputting a 1^{st} predicted time series feature;
inputting, to a j^{th} decoding layer of the decoder, a (j-1)^{th} predicted time series feature output by a (j-1)^{th} decoding layer and a j^{th} time series sub-feature of each historical time series feature, and outputting a j^{th} predicted time series feature, wherein j∈[2, J]; and
determining the predicted time series data based on a J^{th} predicted time series feature output by a J^{th} decoding layer of the decoder and the prediction time window.

3. The method according to claim 2, wherein inputting the current time series data and the 1^{st} time series sub-feature of each historical time series feature to the 1^{st} decoding layer of the decoder, and outputting the 1^{st} predicted time series feature comprises:
encoding the current time series data, to obtain a 1^{st} encoded time series feature;
determining, based on a similarity between the 1^{st} time series sub-feature of each historical time series feature and the 1^{st} encoded time series feature, an attention weight corresponding to the 1^{st} time series sub-feature of each historical time series feature; and
performing weighted summation on the 1^{st} time series sub-feature of each historical time series feature based on the attention weight corresponding to the 1^{st} time series sub-feature of each historical time series feature, to obtain the 1^{st} predicted time series feature.

4. The method according to claim 2, wherein inputting, to the j^{th} decoding layer of the decoder, the (j-1)^{th} predicted time series feature output by the (j-1)^{th} decoding layer and the j^{th} time series sub-feature of each historical time series feature, and outputting the j^{th} predicted time series feature comprises:
encoding the (j-1)^{th} predicted time series feature, to obtain a j^{th} encoded time series feature;
determining, based on a similarity between the j^{th} time series sub-feature of each historical time series feature and the j^{th} encoded time series feature, an attention weight corresponding to the j^{th} time series sub-feature of each historical time series feature; and
performing weighted summation on the j^{th} time series sub-feature of each historical time series feature based on the attention weight corresponding to the j^{th} time series sub-feature of each historical time series feature, to obtain the j^{th} predicted time series feature.

5. The method according to claim 1, wherein the encoder comprises a feedforward network module and a multi-head self-attention mechanism module, the feedforward network module comprises a Fourier transform convolution unit, the Fourier transform convolution unit is configured to perform Fourier transform and convolution processing on an input feature, and the multi-head self-attention mechanism module is configured to generate a historical time series feature by using a multi-head self-attention mechanism; and
encoding the plurality of groups of historical time series data by using the plurality of encoders respectively, to obtain the plurality of historical time series features respectively corresponding to the plurality of groups of historical time series data comprises:
for an encoder corresponding to any group of historical time series data, inputting the historical time series data to a feedforward network module of the encoder, and outputting an intermediate time series feature; and
inputting the intermediate time series feature and the historical time series data to the multi-head self-attention mechanism module, and outputting a historical time series feature corresponding to the historical time series data.

6. The method according to claim 1, wherein obtaining the current time series data collected in the current time window that is adjacent to and precedes the prediction time window in the current time period comprises:
obtaining current original time series data collected in the current time window, and folding, based on a preset folding ratio, the current original time series data into current time series data in at least two dimensions, wherein the folding ratio indicates scales of folded series data in different dimensions, and a dimension of the current time series data is greater than that of the current original time series data; and
obtaining the plurality of groups of historical time series data separately collected in the same target time window of the plurality of historical time periods comprises:
obtaining each group of historical original time series data collected in the same target time window in each historical time period, and folding, based on the preset folding ratio, each group of historical original time series data into historical time series data in at least two dimensions, wherein a dimension of the historical time series data is greater than that of the historical original time series data.

7. The method according to any one of claims 1 to 6, wherein the target object comprises a user request, the behavior data comprises request traffic of the user request, and the predicted time series data comprises predicted request traffic of the user request at the plurality of time points in the prediction time window; and after obtaining the predicted time series data, the method further comprises:
scheduling, based on the predicted request traffic of the user request at the plurality of time points in the prediction time window, a computing resource used to process the user request, so that the scheduled computing resource adapts to the predicted request traffic.

8. The method according to any one of claims 1 to 6, wherein the target object comprises a traffic area, the behavior data comprises vehicle traffic in the traffic area, and the predicted time series data comprises predicted vehicle traffic in the traffic area at the plurality of time points in the prediction time window; and after obtaining the predicted time series data, the method further comprises:
adjusting a traffic signal timing scheme of a traffic signal light in the traffic area in the prediction time window based on the predicted vehicle traffic in the traffic area at the plurality of time points in the prediction time window, so that the adjusted traffic signal timing scheme adapts to the predicted vehicle traffic.

9. A time series data prediction apparatus, wherein the apparatus comprises:
an obtaining module, configured to: in a prediction time window set for a to-be-predicted target object in a current time period, obtain current time series data collected in a current time window that is adjacent to and precedes the prediction time window in the current time period, and obtain a plurality of groups of historical time series data separately collected in a same target time window of a plurality of historical time periods, wherein the target time window comprises the prediction time window and the current time window, and time series data comprises generated behavior data of the target object at a plurality of time points in a time window;
an encoding module, configured to encode the plurality of groups of historical time series data by using a plurality of encoders respectively, to obtain a plurality of historical time series features respectively corresponding to the plurality of groups of historical time series data, wherein each historical time series feature represents relative location information and change trend information of each group of historical time series data in the target time window; and
a decoding module, configured to determine, by using a decoder based on the plurality of historical time series features and the current time series data, predicted time series data corresponding to the target object in the prediction time window, wherein the predicted time series data comprises predicted behavior data of the target object at a plurality of time points in the prediction time window.

10. A time series data prediction apparatus, comprising:
a processor; and
a memory, configured to store instructions executable by the processor, wherein
when the processor is configured to execute the instructions, the method according to any one of claims 1 to 8 is implemented.

11. A non-volatile computer-readable storage medium, wherein the non-volatile computer-readable storage medium stores computer program instructions; and when the computer program instructions are executed by a processor, the method according to any one of claims 1 to 8 is implemented.

12. A computer program product, comprising computer-readable code or a non-volatile computer-readable storage medium carrying computer-readable code, wherein when the computer-readable code is run in an electronic device, a processor in the electronic device performs the method according to any one of claims 1 to 8.
